# EUROPÄISCHE PATENTSCHRIFT

(11) **EP 2 965 939 B1**
(45) Veröffentlichungstag und Bekanntmachung des Hinweises auf die Patenterteilung: **31.08.2022**
(21) Anmeldenummer: 15175473.6
(22) Anmeldetag: 06.07.2015
(51) Int. Cl.: B60L 3/08, B66F 9/075, B66F 17/00, B60L 58/15, B60L 3/04

(54) **FLURFÖRDERZEUG MIT EINEM BATTERIEGESPEISTEN FAHRANTRIEB SOWIE EIN VERFAHREN ZUM BETRIEB EINES BATTERIEGESPEISTEN FLURFÖRDERZEUGS**
INDUSTRIAL TRUCK WITH A BATTERY POWERED TRACTION DRIVE AND METHOD FOR OPERATING A BATTERY-POWERED INDUSTRIAL TRUCK
CHARIOT DE MANUTENTION DOTE D'UN ENTRAINEMENT ALIMENTE PAR BATTERIE ET PROCEDE DE FONCTIONNEMENT D'UN CHARIOT DE MANUTENTION ALIMENTE PAR BATTERIE

(30) Priorität: 10.07.2014 DE 102014109670
(43) Veröffentlichungstag der Anmeldung: 13.01.2016
(73) Patentinhaber: Jungheinrich Aktiengesellschaft, 22047 Hamburg (DE)
(72) Erfinder: Brauer, Hans-Georg, 24232 Schönkirchen (DE); Kautsky, Adrian, 21079 Hamburg (DE)
(74) Vertreter: Hauck Patentanwaltspartnerschaft mbB

(56) Entgegenhaltungen:
- EP-A1- 2 428 483
- EP-A2- 2 105 342
- WO-A1-2004/009396
- DE-A1-102010 046 172
- US-A1- 2012 016 544

## Beschreibung

Die Erfindung betrifft ein Flurförderzeug mit einem batteriegespeisten Fahrantrieb, das eine Fahrzeugsteuerung und mindestens eine Fahrzeugbatterie aufweist. Zudem betrifft die Erfindung ein Verfahren zum Betrieb eines batteriegespeisten Flurförderzeugs.

Allgemein ist bekannt, dass Fahrzeugbatterien an Flurförderzeugen während des Betriebes überwacht werden. Hierzu ist bekannt, die Fahrzeugbatterie mit einer Batteriesteuerung auszustatten, an der Messwerte zu Spannung und/oder Strom der Batterie anliegen. Auch Temperaturwerte der Batterie können überwacht und in der Batteriesteuerung verarbeitet werden. Ferner ist es bekannt, dass die an der Batteriesteuerung vorliegenden Werte zum Zustand der Batterie an ein Ladegerät oder an eine Batteriesteuerung weitergeleitet werden, um einen nach Möglichkeit schonenden Betrieb der Fahrzeugbatterie sicherzustellen.

Für batteriegespeiste Fahrantriebe ist bekannt, über einen generatorischen Bremsvorgang das Fahrzeug abzubremsen und auf diese Weise die Fahrzeugbatterie wieder aufzuladen. Bei dem generatorischen Betrieb ist stets zu berücksichtigen, dass nicht ein zu großer Rekuperationsstrom an der Batterie anliegt oder die Batterie mit der Zeit überladen wird. In diesem Fall schaltet die Batteriesteuerung die Batterie ab, beispielsweise indem ein Schütz geöffnet wird und das Fahrzeug eine Notbremsung durchführt.

Nachteilig hieran ist, dass das Trennelement, beispielsweise als Schütz, hierdurch einem erhöhten Verschleiß ausgesetzt ist und durch das Blockieren der Räder bei der Notbremsung eine unkontrollierbare Rutschbewegung des Fahrzeugs entsteht, die zu einem übermäßigen Abrieb des Rades bzw. der Räder an dem Flurförderzeug und zu gefährlichen Situationen führen.

Aus EP 2 105 342 A2 ist ein Flurförderzeug mit einem elektrischen Antrieb bekannt geworden, bei dem ein Neigungssensor vorgesehen ist, der dafür ausgelegt ist, die Neigung des Flurförderzeugs zu erkennen. Ein an dem Flurförderzeug vorgesehener zweiter Energiespeicher wird entsprechend dem Neigungswert geladen.

Aus DE 10 2010 046 172 ist ein Verfahren zum Betreiben eines elektrisch angetriebenen Flurförderzeugs bekannt, bei dem ein Neigungssensor in einer Steuerung des Fahrantriebs vorgesehen sein kann.

Der Erfindung liegt die Aufgabe zugrunde, ein Flurförderzeug mit batteriegespeistem Fahrantrieb sowie ein Verfahren zu dessen Betrieb bereitzustellen, das mit einfachen Mitteln das Auftreten von kritischen Situationen im Rekuperationsbetrieb vermeidet. Erfindungsgemäß wird die Aufgabe durch ein Flurförderzeug mit den Merkmalen aus Anspruch 1 sowie ein Verfahren zum Betrieb eines Flurförderzeugs mit den Merkmalen aus Anspruch 7 gelöst. Vorteilhafte Ausgestaltungen bilden den Gegenstand der Unteransprüche.

Das erfindungsgemäße Flurförderzeug nach Anspruch 1 ist mit einem batteriegespeisten Fahrantrieb ausgestattet. Der Fahrantrieb erlaubt einen motorischen Antrieb mit einer Leistungsentnahme aus der Batterie und einem generatorischen Bremsbetrieb, bei dem rekuperativ gewonnene Leistung in der Batterie gespeichert wird. Das erfindungsgemäße Flurförderzeug besitzt eine Fahrzeugsteuerung und mindestens eine Fahrzeugbatterie. Von den Fahrzeugbatterien ist jede mit einer Batteriesteuerung ausgestattet, an der Messwerte zu Spannung und/oder Strom der Batterie anliegen.

Die Batteriesteuerung ist mit der Fahrzeugsteuerung zum Austausch von Signalen verbunden. Erfindungsgemäß ist mindestens eine der Batterien mit einem Neigungssensor ausgestattet, der einen Wert für eine sensierte Neigung an die Batteriesteuerung anlegt, die den Wert für die sensierte Neigung an die Fahrzeugsteuerung weiterleitet. Der Neigungssensor in einer Batterie des Flurförderzeugs erlaubt es, zuverlässig die Neigung und hier insbesondere die Neigung des die Batterie tragenden Antriebsteils des Flurförderzeugs zu erfassen. Ein besonderer Vorteil an der Anordnung des Neigungssensors in der Batterie ist, dass hier konstruktiv der Aufbau des Flurförderzeugs nicht geändert werden muss, sondern durch eine entsprechende Batterie, die einen Neigungssensor aufweist, auch Flurförderzeuge, die keinen Neigungssensor besitzen, mit einem solchen ohne großen Aufwand nachgerüstet werden können. Über die mit der Fahrzeugsteuerung in Datenaustausch stehende Verbindung können dann die sensierten Neigungswerte über die Batteriesteuerung ohne zusätzlichen konstruktiven Aufwand an die Fahrzeugsteuerung weitergeleitet werden. Ein weiterer Vorteil liegt in dem Sicherheitsaspekt, dass bei einem kippenden Fahrzeug die Batterie direkt von der elektrischen Versorgung getrennt werden kann, wodurch Kurzschlüsse, Brände und andere Gefahren vermieden werden können.

In einer bevorzugten Ausgestaltung vergleichen die Batteriesteuerung und/oder die Fahrzeugsteuerung den Wert für die sensierte Neigung mit einem ersten kritischen Neigungswert und setzt im Fall einer kritischen Neigung ein erstes Warnsignal ab. Das erste Warnsignal zeigt eine Neigung eines Fahrzeugs an, die über einem ersten kritischen Neigungswert liegt. Ein kritischer Neigungswert kann unter verschiedenen Gesichtspunkten gewählt sein. So kann der kritische Neigungswert beispielsweise berücksichtigen, dass Batterien nicht übermäßig stark geneigt werden dürfen. Es können aber auch Gesichtspunkte der Fahrzeugstabilität bei der Bestimmung des ersten kritischen Neigungswertes berücksichtigt werden. Bevorzugt löst die Fahrzeugsteuerung, ansprechend auf das erste Warnsignal zu einer kritischen Neigung des Fahrzeugs, die Abschaltung des Fahrzeugs aus. Hier ist in der Fahrzeugsteuerung hinterlegt, dass bei Auftreten eines Neigungswertes größer als der erste kritische Neigungswert das Flurförderzeug nicht weiterbetrieben werden darf und von daher stillgelegt wird.

In einer weiteren bevorzugten Ausgestaltung vergleicht die Batterie- und/oder Fahrzeugsteuerung den Wert für die sensierte Neigung mit einem zweiten kritischen Neigungswert und einem Ladezustand der Batterie. Ein zweites Warnsignal wird dann abgesetzt, wenn der Ladezustand einen Höchstwert und der sensierte Neigungswert den zweiten kritischen Neigungswert überschreitet. Dem zweiten Warnsignal liegt die Erkenntnis zugrunde, dass bei einem geneigten Flurförderzeug mit einem einsetzenden generatorischen Bremsen elektrische Leistung zur Einspeisung in die Batterie zur Verfügung gestellt werden kann. Ist jedoch die Batterie bereits gut geladen, so kann es zu einer Überspannung und damit einer Notabschaltung der Batterie kommen. Hier kann in einer bevorzugten Ausgestaltung, bereits ansprechend auf das zweite Warnsignal, die Fahrgeschwindigkeit des Flurförderzeugs reduziert werden. Auf diese Weise wird vorausschauend bereits ein Beitrag geleistet, dass in einem Rekuperationsbetrieb unerwünscht hoher Strom vermieden wird, der wiederum wegen der begrenzten Stromaufnahme einer fast vollgeladenen Batterie zu einer Überspannung mit Sicherheitsabschaltung führen kann.

In einer Weiterentwicklung des erfindungsgemäßen Flurförderzeugs ist als Neigungssensor ein Beschleunigungssensor vorgesehen, der nicht nur auf die Erdbeschleunigung zur Messung der Neigung reagiert, sondern auch auf eine Beschleunigung bzw. Abbremsung des Flurförderzeugs. Hierzu ist der Beschleunigungssensor bevorzugt derart in dem Flurförderzeug angeordnet, dass eine Beschleunigung oder eine Abbremsung in bzw. entgegen der Fahrtrichtung erfasst werden kann.

Die erfindungsgemäße Aufgabe wird ebenfalls durch ein Verfahren zum Betrieb eines batteriegespeisten Flurförderzeugs nach Anspruch 7 gelöst. Das Verfahren weist dabei die Verfahrensschritte auf, dass ein in einer Batterie angeordneter Neigungssensor die Neigung der Batterie erfasst und der erfasste Neigungswert über die Batteriesteuerung an die Fahrzeugsteuerung weitergeleitet wird. In der Fahrzeugsteuerung kann dann der erfasste Neigungswert ausgewertet werden. Die Auswertung kann unter Hinzuziehung weiterer Zustandsgrößen des Flurförderzeugs, wie beispielsweise auch zu dessen Batterie erfolgen.

In einer bevorzugten Ausgestaltung wird der erfasste Neigungswert mit einem kritischen Neigungswert verglichen und im Falle einer kritischen Neigung ein erstes Warnsignal abgesetzt. Das erste Warnsignal kann im Rahmen des Flurförderzeugs weiter verarbeitet werden. So können beispielsweise einzelne Aktoren, wie beispielsweise Hub- oder Bremsaktoren, ansprechend auf das erste Warnsignal, in die Steuerung des Flurförderzeugs eingreifen.

In einer bevorzugten Ausgestaltung löst die Fahrzeugsteuerung, ansprechend auf das erste Warnsignal, ein Abschalten des Fahrzeugs aus. Auf diese Weise ist sichergestellt, dass das Fahrzeug nicht länger bei einer kritischen Neigung betrieben wird.

In einer bevorzugten Weiterbildung wird der erfasste Neigungswert mit einem zweiten kritischen Neigungswert verglichen. Ein Ladezustand der Batterie wird zudem ermittelt. Von der Batteriesteuerung und/oder der Fahrzeugsteuerung wird ein zweites Warnsignal abgesetzt, wenn der Ladezustand einen Höchstwert und der sensierte Neigungswert einen zweiten kritischen Neigungswert überschreiten. Bei dieser Ausgestaltung des Verfahrens wird darauf zurückgegriffen, dass für vollgeladene Batterien das Arbeiten mit dem Flurförderzeug entlang einer Neigung zu kritischen Zuständen des Flurförderzeugs führen kann. Insbesondere kann die Fahrzeugsteuerung beispielsweise vorsehen, dass die Fahrgeschwindigkeit reduziert wird. Bei einer reduzierten Fahrgeschwindigkeit ist auch der im rekuperativen Betrieb aufgenommene Strom zum Laden der Batterie geringer, so dass es nicht zu einem Überstrom oder zu einem Überladen der Batterie kommen kann.

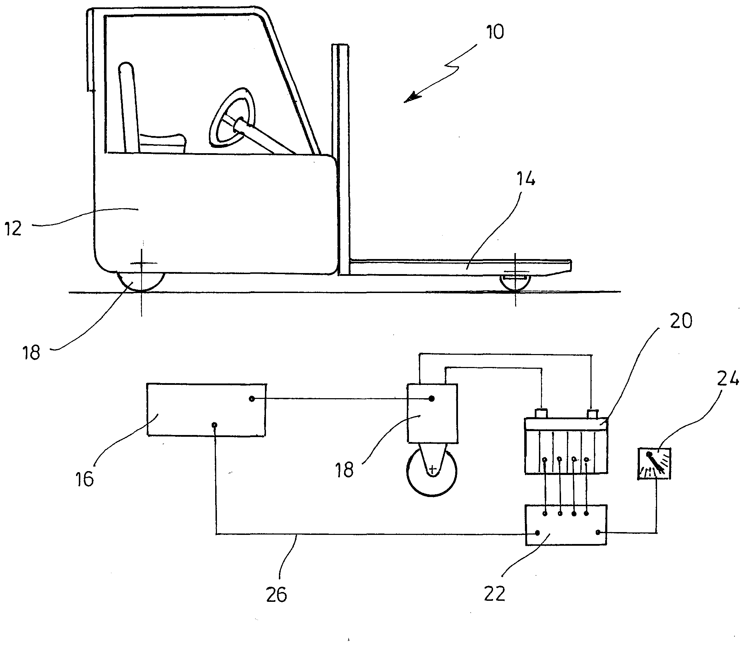

Eine bevorzugte Ausgestaltung der Erfindung wird nachfolgend anhand der einzigen Figur näher erläutert.

Die Figur zeigt ein Flurförderzeug 10 mit einem Antriebsteil 12 und einem Lastteil 14. Das Fahrzeug, in der Regel das Antriebsteil 12 des Fahrzeugs, ist mit einer Fahrzeugsteuerung 16 ausgestattet. Die Fahrzeugsteuerung 16 ist beispielsweise in ein BUS-System eingebunden und kommuniziert mit den weiteren Aktoren in dem Flurförderzeug. Die Fahrzeugsteuerung 16 kommuniziert insbesondere auch mit dem angetriebenen Rad 18, das in der Figur noch einmal schematisch dargestellt ist. Das angetriebene Rad 18 ist mit einer Batterie 20 verbunden. Die elektrische Verbindung dient hierbei einerseits dazu, generatorisch erzeugte Leistung aus dem angetriebenen Rad 18 in die Batterie 20 einzuspeisen und um aus der Batterie 20 im motorischen Betrieb des angetriebenen Rads 18 dessen Antrieb zu speisen. Wie schematisch in der Figur dargestellt, ist eine als Batteriemanagementsystem (BMS) ausgebildete Batteriesteuerung 22 vorgesehen, die Werte zum Strom und zur Spannung aus den einzelnen Batteriezellen erfasst. Auch kann vorgesehen sein, dass zu einzelnen oder vielen Batteriezellen eine Temperatur in der Batterie erfasst wird. Die Batterie 20 ist mit einem Neigungssensor 24, der auch als ein Beschleunigungssensor dienen kann, ausgestattet. Über den Neigungssensor 24 liegen an der Batteriesteuerung 22 die Neigungswerte der Batterie an. Über die Batteriesteuerung 22 werden die Neigungswerte an die Fahrzeugsteuerung 16 weitergeleitet, wo sie entsprechend verarbeitet werden können.

Besonders herauszustellen ist bei der Verarbeitung der in der Batterie erfassten Neigungswerte einerseits der Vergleich mit einem ersten kritischen Neigungswert. Dieser Neigungswert zeigt an, dass die Batterie in einer solch geneigten Stellung nach Möglichkeit nicht betrieben werden soll, unabhängig davon, ob ein Ladevorgang oder ein Entnahmevorgang erfolgt. Erkennt der Neigungssensor 24 eine so stark geneigte Batterie, so wird ein entsprechendes erstes Warnsignal über die Leitung 26 an die Fahrzeugsteuerung 16 abgesetzt.

Eine zweite Situation, die zu einem Eingreifen in den Betrieb des Flurförderzeugs führt, liegt vor, wenn die von dem Neigungssensor 24 erfasste Neigung des Flurförderzeugs einen zweiten kritischen Wert übersteigt und zugleich die Batteriesteuerung 22 feststellt, dass die Ladung der Batterie einen vorgegebenen Schwellwert überschritten hat. In diesem Fall wird, ausgehend von der Erwartung, dass ein auf einer Neigung betriebenes Flurförderzeug in einem Rekuperationsbetrieb einen großen elektrischen Strom zur Verfügung stellt, die Fahrgeschwindigkeit vorausschauend reduziert. Hierdurch kann ein unnötiges Trennen der Batterie vom Fahrzeug in vielen Fällen vermieden werden.

## Patentansprüche

1. Flurförderzeug (10) ohne Neigungssensor mit mindestens einer Fahrzeugbatterie (20, 22, 24), in der ein Neigungssensor (24) angeordnet ist, wobei das Flurförderzeug einen batteriegespeisten Fahrantrieb und eine Fahrzeugsteuerung (16) aufweist, wobei jede der mindestens einen Batterie mit einer Batteriesteuerung (22) ausgestattet ist, an der Messwerte zur Spannung und/oder Strom der Batterie (20, 22, 24) anliegen, wobei die Batteriesteuerung (22) mit der Fahrzeugsteuerung (16) zum Austausch von Signalen verbunden ist und der Neigungssensor (24) dazu ausgebildet ist, einen Wert für eine sensierte Neigung an die Batteriesteuerung (22) anzulegen, die dazu ausgebildet ist, den Wert für die sensierte Neigung an die Fahrzeugsteuerung (16) weiterzuleiten.

2. Flurförderzeug nach Anspruch 1, **dadurch gekennzeichnet, dass** die Batteriesteuerung (22) und/oder die Fahrzeugsteuerung (16) dazu ausgebildet sind, den Wert für die sensierte Neigung mit einem ersten kritischen Neigungswert zu vergleichen und im Fall einer kritischen Neigung ein erstes Warnsignal abzusetzen.

3. Flurförderzeug nach Anspruch 2, **dadurch gekennzeichnet, dass** die Fahrzeugsteuerung (16) dazu ausgebildet ist, ansprechend auf das erste Warnsignal, eine Abschaltung des Flurförderzeugs (10) auszulösen.

4. Flurförderzeug nach einem der Ansprüche 1 bis 3, **dadurch gekennzeichnet, dass** die Batteriesteuerung (22) und/oder Fahrzeugsteuerung (16) dazu ausgebildet sind, den Wert für die sensierte Neigung mit einem zweiten kritischen Neigungswert zu vergleichen und einen Ladezustand der Batterie zu ermitteln, wobei die Batteriesteuerung (22) dazu ausgebildet ist, ein zweites Warnsignal an die Fahrzeugsteuerung (16) abzusetzen, wenn der Ladezustand einen Höchstwert und der sensierte Neigungswert den zweiten kritischen Neigungswert überschreiten.

5. Flurförderzeug nach Anspruch 4, **dadurch gekennzeichnet, dass** die Fahrzeugsteuerung (16) dazu ausgebildet ist, ansprechend auf das zweite Warnsignal, die Fahrgeschwindigkeit zu reduzieren.

6. Flurförderzeug nach einem der Ansprüche 1 bis 5, **dadurch gekennzeichnet, dass** der Neigungssensor (24) als ein Beschleunigungssensor ausgebildet ist, der eine an dem Flurförderzeug (10) angreifende Beschleunigung erfasst.

7. Verfahren zum Betrieb eines batteriegespeisten Flurförderzeugs nach einem der vorhergehenden Ansprüche
mit folgenden Verfahrensschritten:
- in der mit Neigungssensor (24) und Batteriesteuerung (22) ausgestatteten Batterie wird die Neigung der Batterie erfasst und
- der erfasste Neigungswert wird über die Batteriesteuerung (22) der Batterie an die Fahrzeugsteuerung (16) des batteriegespeisten Fahrzeugs weitergeleitet.

8. Verfahren nach Anspruch 7, **dadurch gekennzeichnet, dass** der erfasste Neigungswert mit einem ersten kritischen Neigungswert verglichen und im Fall einer kritischen Neigung ein erstes Warnsignal abgesetzt wird.

9. Verfahren nach Anspruch 7 oder 8, **dadurch gekennzeichnet, dass** die Fahrzeugsteuerung, ansprechend auf ein erstes Warnsignal, ein Abschalten des Fahrzeugs auslöst.

10. Verfahren nach einem der Ansprüche 7 bis 9, **dadurch gekennzeichnet, dass**
- der erfasste Neigungswert mit einem zweiten kritischen Neigungswert verglichen wird,
- ein Ladezustand der Batterie (20, 22, 24) ermittelt wird und
- von der Batteriesteuerung (22) und/oder der Fahrzeugsteuerung (16) ein zweites Warnsignal abgesetzt wird, wenn der Ladezustand einen Höchstwert und der erfasste Neigungswert den zweiten kritischen Neigungswert überschreitet.

11. Verfahren nach Anspruch 10, **dadurch gekennzeichnet, dass** die Fahrzeugsteuerung (16) bei Vorliegen des zweiten Warnsignals die Fahrgeschwindigkeit reduziert.

## Claims

1. An industrial truck (10) without an inclination sensor, having at least one vehicle battery (20, 22, 24) in which an inclination sensor (24) is arranged, wherein the industrial truck has a battery-powered traction drive and a vehicle controller (16), wherein each of the at least one battery is provided with a battery controller (22), measurement values of the voltage and/or current of the battery (20, 22, 24) being applied thereto, wherein the battery controller (22) is connected to the vehicle controller (16) for exchanging signals and the inclination sensor (24) is configured to apply a value of a detected inclination to the battery controller (22) which is configured to transmit the value of the detected inclination to the vehicle controller (16).

2. The industrial truck according to claim 1, **characterized in that** the battery controller (22) and/or the vehicle controller (16) are configured to compare the value of the detected inclination with a first critical inclination value and to emit a first warning signal in the case of a critical inclination.

3. The industrial truck according to claim 2, **characterized in that** the vehicle controller (16) is configured to trigger a shutdown of the industrial truck (10) in response to the first warning signal.

4. The industrial truck according to one of claims 1 to 3, **characterized in that** the battery controller (22) and/or vehicle controller (16) are configured to compare the value of the detected inclination with a second critical inclination value and to determine a state of charge of the battery, wherein the battery controller (22) is configured to emit a second warning signal to the vehicle controller (16) if the state of charge exceeds a maximum value and the detected inclination value exceeds the second critical inclination value.

5. The industrial truck according to claim 4, **characterized in that** the vehicle controller (16) is configured to reduce the driving speed in response to the second warning signal.

6. The industrial truck according to one of claims 1 to 5, **characterized in that** the inclination sensor (24) is configured as an acceleration sensor which detects an acceleration acting on the industrial truck (10).

7. A method for operating a battery-powered industrial truck according to one of the preceding claims, having the following method steps:
- the inclination of the battery is detected in the battery provided with the inclination sensor (24) and battery controller (22) and
- the detected inclination value is transmitted via the battery controller (22) of the battery to the vehicle controller (16) of the battery-powered vehicle.

8. The method according to claim 7, **characterized in that** the detected inclination value is compared with a first critical inclination value and a first warning signal is emitted in the case of a critical inclination.

9. The method according to claim 7 or 8, **characterized in that** the vehicle controller triggers a shutdown of the vehicle in response to a first warning signal.

10. The method according to one of claims 7 to 9, **characterized in that**
- the detected inclination value is compared with a second critical inclination value,
- a state of charge of the battery (20, 22, 24) is determined and
- a second warning signal is emitted from the battery controller (22) and/or the vehicle controller (16) if the state of charge exceeds a maximum value and the detected inclination value exceeds the second critical inclination value.

11. The method according to claim 10, **characterized in that** the vehicle controller (16) reduces the driving speed in the presence of the second warning signal.

## Revendications

1. Chariot de manutention (10) sans capteur d'inclinaison, doté d'au moins une batterie de véhicule (20, 22, 24) dans laquelle est disposé un capteur d'inclinaison (24), dans lequel le chariot de manutention présente un entraînement alimenté par batterie ainsi qu'une commande de véhicule (16),
dans lequel
- chacune des au moins une batteries est équipée d'une commande de batterie (22) à laquelle s'appliquent des valeurs de mesure pour la tension et/ou le courant de la batterie (20, 22, 24), dans lequel la commande de batterie (22) est reliée à la commande de véhicule (16) pour l'échange de signaux et le capteur d'inclinaison (24) est conçu pour appliquer une valeur d'inclinaison détectée à la commande de batterie (22), laquelle est conçue pour transmettre la valeur d'inclinaison détectée à la commande de véhicule (16).

2. Chariot de manutention selon la revendication 1, **caractérisé en ce que** la commande de batterie (22) et/ou la commande de véhicule (16) est/sont conçue(s) pour comparer la valeur d'inclinaison détectée avec une première valeur d'inclinaison critique et pour envoyer un premier signal d'alarme en cas d'inclinaison critique.

3. Chariot de manutention selon la revendication 2, **caractérisé en ce que** la commande de véhicule (16) est conçue pour déclencher l'arrêt du chariot de manutention (10) en réponse au premier signal d'alarme.

4. Chariot de manutention selon l'une des revendications 1 à 3, **caractérisé en ce que** la commande de batterie (22) et/ou la commande de véhicule (16) est/sont conçue(s) pour comparer la valeur d'inclinaison détectée avec une deuxième valeur d'inclinaison critique et pour déterminer un état de charge de la batterie, dans lequel la commande de batterie (22) est conçue pour envoyer un deuxième signal d'alarme à la commande de véhicule (16) lorsque l'état de charge dépasse une valeur maximale et que la valeur d'inclinaison détectée dépasse la deuxième valeur d'inclinaison critique.

5. Chariot de manutention selon la revendication 4, **caractérisé en ce que** la commande de véhicule (16) est conçue pour réduire la vitesse de déplacement en réponse au deuxième signal d'alarme.

6. Chariot de manutention selon l'une des revendications 1 à 5, **caractérisé en ce que** le capteur d'inclinaison (24) est conçu comme un capteur d'accélération détectant une accélération agissant sur le chariot de manutention (10).

7. Procédé de fonctionnement d'un chariot de manutention alimenté par batterie selon l'une des revendications précédentes, comprenant les étapes de procédé suivantes :
- l'inclinaison de la batterie est détectée dans la batterie équipée du capteur d'inclinaison (24) et de la commande de batterie (22) et
- la valeur d'inclinaison détectée est transmise via la commande de batterie (22) à la commande de véhicule (16) du véhicule alimenté par batterie.

8. Procédé selon la revendication 7, **caractérisé en ce que** la valeur d'inclinaison détectée est comparée avec une première valeur d'inclinaison critique et un premier signal d'alarme est envoyé en cas d'inclinaison critique.

9. Procédé selon la revendication 7 ou 8, **caractérisé en ce que** la commande de véhicule déclenche un arrêt du véhicule en réponse au premier signal d'alarme.

10. Procédé selon l'une des revendications 7 à 9, **caractérisé en ce que**
- la valeur d'inclinaison détectée est comparée avec une deuxième valeur d'inclinaison critique,
- un état de charge de la batterie (20, 22, 24) est déterminé et
- un deuxième signal d'alarme est envoyé par la commande de batterie (22) et/ou par la commande de véhicule (16), lorsque l'état de charge dépasse une valeur maximale et que la valeur d'inclinaison détectée dépasse la deuxième valeur d'inclinaison critique.

11. Procédé selon la revendication 10, **caractérisé en ce que** la commande de véhicule (16) réduit la vitesse de déplacement en présence du deuxième signal d'alarme.
